(19) Europäisches Patentamt
European Patent Office
Office européen des brevets

(11) **EP 3 489 715 B1**

(12) **EUROPÄISCHE PATENTSCHRIFT**

(45) Veröffentlichungstag und Bekanntmachung des Hinweises auf die Patenterteilung:
**16.12.2020   Patentblatt 2020/51**

(51) Int Cl.:
*G01S 7/481* (2006.01)     *G01S 17/08* (2006.01)

(21) Anmeldenummer: **18198447.7**

(22) Anmeldetag: **03.10.2018**

(54) **OPTISCHE VORRICHTUNG ZUM DETEKTIEREN EINES AN EINEM FERNZIEL REFLEKTIERTEN LICHTSTRAHLS**

OPTICAL DEVICE FOR DETECTING A LIGHT BEAM REFLECTED ON A DISTANT TARGET

DISPOSITIF OPTIQUE PERMETTANT DE DÉTECTER UN FAISCEAU LUMINEUX RÉFLÉCHI SUR UNE CIBLE DISTANTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.11.2017   AT 509822017**

(43) Veröffentlichungstag der Anmeldung:
**29.05.2019   Patentblatt 2019/22**

(73) Patentinhaber: **Riegl Laser Measurement Systems GmbH**
**3580 Horn (AT)**

(72) Erfinder:
• **ULLRICH, Andreas**
**3003 Gablitz (AT)**

• **REICHERT, Rainer**
**3580 Horn (AT)**
• **HOFBAUER, Andreas**
**3910 Zwettl (AT)**

(74) Vertreter: **Weiser & Voith**
**Patentanwälte Partnerschaft**
**Kopfgasse 7**
**1130 Wien (AT)**

(56) Entgegenhaltungen:
**DE-A1- 10 051 302        DE-A1- 19 907 546**
**DE-A1-102008 014 275     JP-A- 2009 008 404**
**US-A- 3 719 421**

**Beschreibung**

Die vorliegende Erfindung betrifft eine optische Vorrichtung zum Detektieren eines an einem Fernziel reflektierten Lichtstrahls, umfassend eine Lichtquelle, die dazu ausgebildet ist, den Lichtstrahl in eine vorbestimmte Richtung auf das Fernziel auszusenden, eine Primärlinse, deren optische Achse im Wesentlichen parallel zur genannten vorbestimmten Richtung liegt und die dazu ausgebildet ist, den fernzielreflektierten Lichtstrahl in einem ersten Brennpunkt zu fokussieren, und eine Detektoreinheit zur Detektion von fokussiertem Licht.

Derartige optische Vorrichtungen werden beispielsweise in der Laservermessungstechnik eingesetzt, bei der ein Laserstrahl ausgesandt, an einem Fernziel reflektiert und seine Reflexion in einem Detektor registriert wird. Aus der Differenz der Aussendezeit und der Empfangszeit kann daraufhin auf die Entfernung des Fernziels geschlossen werden.

Um den fernzielreflektierten Lichtstrahl in einem Detektor zu registrieren, wird der einfallende Lichtstrahl gebündelt. Zu diesem Zweck wird eine sogenannte Primärlinse im Strahlengang des fernzielreflektierten Lichtstrahls angeordnet, die den fernzielreflektierten Lichtstrahl auf einen Brennpunkt fokussiert, in welchem der Detektor angeordnet ist. Da Fernziele in Relation zur Größenordnung der optischen Vorrichtung weit entfernt sind, können die Strahlrichtungen des ausgesandten Lichtstrahls und des fernzielreflektierten Lichtstrahls als parallel angesehen werden.

Ein Problem bei derartigen optischen Vorrichtungen ist jedoch, dass der ausgesandte Lichtstrahl nicht nur vom zu vermessenden Fernziel reflektiert wird, sondern auch von störenden "Nahzielen" in der Luft, wie Schmutzpartikeln oder Insekten. Die von solchen Störungen reflektierten Lichtstrahlen werden vom Detektor registriert und sorgen für unerwünschte Ergebnisse bzw. Messfehler.

Aus dem Stand der Technik ist bekannt, dieses Problem zu lösen, indem anhand der Laufzeit des Lichtstrahls ermittelt wird, welche Reflexionen aus dem Nahbereich stammen, wie z.B. in der WO 2016/173711 A1 beschrieben. Derart ermittelte Nahbereichsreflexionen können daraufhin rechnerisch aus dem Gesamtergebnis der Reflexionen gelöscht werden. Diese rechnerischen Lösungen sind jedoch insbesondere bei "Multiple-Time-Around"-fähigen Laserscannern ungeeignet, bei denen sich mehrere Laserimpulse gleichzeitig auf dem Weg zwischen Lichtquelle und Fernziel befinden, wodurch eine direkte Zuordnung von Ergebnissen zu Laufzeiten nur beschränkt möglich ist.

Die Erfindung setzt sich zum Ziel, eine Vorrichtung zu schaffen, die diese Probleme überwindet und eine verbesserte Vermessung von Fernbereichszielen ermöglicht.

Die Erfindung schafft hierzu eine optische Vorrichtung der einleitend genannten Art, bei der die Detektoreinheit derart angeordnet ist, dass der erste Brennpunkt zwischen der Primärlinse und der Detektoreinheit liegt, wobei eine Blende innerhalb eines zur optischen Achse normalen Querschnitts des fernzielreflektierten Lichtstrahls zwischen dem ersten Brennpunkt und der Detektoreinheit angeordnet ist, welche Blende derart angeordnet und/oder ausgebildet ist, dass sie einen größeren Anteil von nahzielreflektierten Lichtstrahlen als von fernzielreflektierten Lichtstrahlen blockiert.

Die Erfindung löst das Problem der unerwünscht detektierten Nahbereichsziele dadurch, dass die Nahbereichsempfindlichkeit der optischen Vorrichtung gedämpft wird, und erzielt dies durch den Einsatz einer zwischen dem ersten Brennpunkt und der Detektoreinheit entfernungsselektiv wirkenden Blende. Die Beabstandung der Detektoreinheit vom ersten Brennpunkt, beispielsweise in einem vorbestimmten Abstand von zu-mindest 100 $\mu$m, schafft hierbei die für die erfindungsgemäße Blende erforderliche zusätzliche Weglänge im Strahlengang des fernzielreflektierten Lichtstrahls.

Durch die Blende wird die Möglichkeit geschaffen, einen höheren Anteil an nahzielreflektiertem im Vergleich zu fernzielreflektiertem Licht auszublenden, indem die Blende im Bereich der Brennpunkte der nahzielreflektierten Lichtstrahlen liegt.

Die Erfindung schafft somit ein System, das Reflexionen aus dem Nahbereich bereits vor dem Detektor blockiert, so dass das vom Detektor ausgegebene Ergebnis eine höhere Gewichtung von fernzielreflektierten Lichtstrahlen zu nahzielreflektierten Lichtstrahlen aufweist. Rechnerische Auswertungen und Verarbeitungen der Detektorausgabe sind somit zur Aufbereitung des Messwertergebnisses nicht mehr erforderlich.

Die erfindungsgemäße optische Vorrichtung kann auf vielen Gebieten des Standes der Technik eingesetzt werden, bei denen ein aktives System die Beleuchtung vornimmt und ein Detektor die Beleuchtungsreflexion aufzeichnet, beispielsweise bei einer Kamera mit Lichtquelle zur Beleuchtung einer Szene. In diesen Fällen kann die Lichtquelle in jeder beliebigen näheren Umgebung der Primärlinse angeordnet sein.

Besonders bevorzugt ist jedoch die Lichtquelle in Strahlrichtung des fernzielreflektierten Lichtstrahls gesehen in dessen Strahlengang vor der Primärlinse angeordnet, und die Blende liegt in jenem Schatten der Lichtquelle, den die Lichtquelle im fernzielreflektierten Lichtstrahl wirft. Insbesondere in der Laservermessungstechnik wird die Lichtquelle häufig direkt vor der Primärlinse angeordnet, um ihre Lichtstrahlen möglichst koaxial in den Strahlengang der einfallenden Lichtstrahlen einzukoppeln, sei es durch Verwendung eines kleinen Umlenkspiegels in der Mitte von der Primärlinse, über den eine seitlich liegende Lichtquelle eingekoppelt wird, oder indem eine kleine Lichtquelle, z.B. eine Laserdiode, direkt vor der Primärlinse angeordnet wird. Die Lichtquelle blockiert an dieser Position unvermeidlich einen Teil des gesamten einfallenden Lichts, einschließlich der erwünschten fernzielreflektierten Lichtstrahlen und der unerwünschten nahzielreflektierten Lichtstrahlen.

Die Erfindung nutzt diesen Umstand aus und positioniert die Blende in diesem von der Lichtquelle geworfenen Schatten, jedoch entfernungsselektiv wirkend zwischen dem ersten Brennpunkt und der Detektoreinheit. Dadurch kommt es im Vergleich zu Stand-der-Technik-Linsensystemen mit vor der Primärlinse angeordneten Lichtquelle zu keiner Abnahme an ausnützbarer fernzielreflektierter Lichtstrahlen, während der Effekt der Reduktion der Nahzielreflexion zur Gänze erhalten bleibt.

In der genannten Ausführungsform nimmt die Blende den genannten Schatten bevorzugt im genannten Querschnitt vollständig ein. Dies führt zu einer Maximierung der durch die Blende blockierten nahzielreflektierten Lichtstrahlen, wobei die fernzielreflektierten Lichtstrahlen nicht von der Blende beeinflusst werden.

Besonders bevorzugt ist zumindest eine weitere Blende innerhalb eines weiteren zur optischen Achse normalen Querschnitts des fernzielreflektierten Lichtstrahls zwischen dem ersten Brennpunkt und der Detektoreinheit angeordnet. Dies ist besonders dann von Vorteil, wenn Blenden eingesetzt werden, die im Vergleich zum Abstand zwischen dem ersten Brennpunkt und der Detektoreinheit dünn sind, z.B. scheibenförmige Blenden. Wenn lediglich eine dünne Scheibenblende eingesetzt wird, kann es vorkommen, dass nahzielreflektierte Lichtstrahlen die optische Achse vor oder hinter der Blende kreuzen und deshalb vom Detektor wahrgenommen werden. Durch den Einsatz von mehreren entlang der optischen Achse aufeinanderfolgenden Blenden wird dieser Effekt minimiert, so dass die Nahbereichsempfindlichkeit weiter reduziert wird.

Wenn mehrere Blenden eingesetzt werden, ist es vorteilhaft, wenn die Blenden im Querschnitt unterschiedliche Flächen aufweisen und ihre Fläche umso größer ist, je weiter die jeweilige Blende vom ersten Brennpunkt beabstandet ist. Dadurch kann die Blendenform an den Strahlengang des fernzielreflektierten Lichtstrahls angepasst werden, wodurch sich der detektierte fernzielreflektierte Lichtanteil nicht vermindert. Folglich werden lediglich vermehrt nahzielreflektierte Lichtstrahlen blockiert.

Bevorzugt ist die Blende eine von einer Glasplatte getragene opake Struktur. Dies maximiert den Anteil an ausnützbarem fernzielreflektierten Licht, da die Glasplatte das fernzielreflektierte Licht in jenen Bereichen, in denen die opake Struktur nicht in die Glasplatte ein- oder auf diese aufgebracht ist, ungehindert passieren lässt. Es werden insbesondere keine störenden Stege oder ähnliches benötigt, um die Blende zu positionieren.

Die Form der Blende selbst kann grundsätzlich beliebig sein. Bevorzugt ist sie an den Schatten angepasst, den die Lichtquelle im fernzielreflektierten Lichtstrahl wirft. So sind prinzipiell Blenden mit rechteckigem, kissenförmigem oder ovalem Querschnitt denkbar. Besonders bevorzugt ist die Blende eine runde Scheibe, da diese leicht zu fertigen und für rechnerische Simulationen ihre Wirkung gut zu modellieren ist.

Auch in Richtung der optischen Achse kann die Blende unterschiedlich ausgebildet sein, z.B. statt mit einer Scheibenform auch in Stabform oder Kegelform, wobei abermals beliebige Querschnitte wie oben beschrieben eingesetzt werden können. Bevorzugt ist die Blende ein Kegel oder ein Kegelstumpf, der sich in Strahlrichtung des fernzielreflektierten Lichtstrahls gesehen erweitert. Dies entspricht gleichsam einem "Kontinuum" an aufeinanderfolgenden, infinitesimal dünnen Scheibenblenden mit fortschreitend größeren Durchmessern, was das Blockieren von nahzielreflektierten Lichtstrahlen im Vergleich zu diskreten Einzelblenden oder Stabblenden erhöht.

Bevorzugt ist in dieser Ausführungsform der Öffnungswinkel des Kegels im Wesentlichen an den Strahlengang des fernzielreflektierten Lichtstrahls angepasst. Dies erzielt eine besonders große Ausbeute an fernzielreflektiertem Licht im Detektor bei einer maximalen Reduktion des nahzielreflektierten Lichts.

Bevorzugt ist die Blende bzw. die dem ersten Brennpunkt nächstliegende der Blenden in einem Abstand von mindestens 100 $\mu$m von dem ersten Brennpunkt angeordnet. Die Anpassung des Abstandes zum ersten Brennpunkt ermöglicht eine flexible Einstellung der Nahbereichsempfindlichkeit der optischen Vorrichtung, und die genannten Werte haben sich in der Praxis als guter Kompromiss erwiesen.

In weiteren vorteilhaften Ausführungsformen beträgt der Durchmesser der Blende 50 - 100 %, bevorzugt 80 - 100 %, besonders bevorzugt im Wesentlichen 100 %, einer Bildgröße B, die gleich $G_R * d_1 / f_1$ ist, wobei $G_R$ der Strahldurchmesser eines ausgesandten Lichtstrahls in einer vorbestimmten Entfernung, $d_1$ der Abstand der Blende zum ersten Brennpunkt und $f_1$ der Abstand der Primärlinse zum ersten Brennpunkt ist.

Damit kann der Anteil an blockierten nahzielreflektierten Lichtstrahlen und damit die Dämpfung der Nahbereichsempfindlichkeit der Vorrichtung voreingestellt werden. Wenn der Durchmesser der Blende z.B. 100 % der Bildgröße entspricht, wird die gesamte Reflexion eines nahen Objekts blockiert, bei weniger als 100 % lediglich ein Bruchteil.

Um den für die Blende benötigten Abstand zwischen dem ersten Brennpunkt und der Detektoreinheit zu erzielen, können zwei verschiedene Ausgestaltungen gewählt werden.

In einer ersten Ausgestaltung der Erfindung umfasst die optische Vorrichtung eine Relais-Optik, die zwischen dem ersten Brennpunkt und der Detektoreinheit angeordnet und dazu ausgebildet ist, den vom ersten Brennpunkt aus divergierenden fernzielreflektierten Lichtstrahl auf einen zweiten Brennpunkt zu fokussieren, wobei die Detektoreinheit im Wesentlichen im zweiten Brennpunkt angeordnet ist. In dieser Ausgestaltung können herkömmliche Detektoren eingesetzt werden, wodurch die Kosten für die optische Vorrichtung niedrig gehalten werden können. Die Relais-Optik kann zusätzlich dazu eingesetzt werden, um spezielle optische Filter wie einen Interferenzfilter im Bereich zwischen den Linsen der Relais-Optik anzuordnen.

Um die Montage der Blende zu erleichtern, kann in dieser Ausgestaltung die Blende an der Relais-Optik montiert sein, was besonders bei der genannten Kegelform einfach ist, da der Kegel oder Kegelstumpf eine hinreichend große Basisfläche zur Montage aufweist. Jedoch ist auch bei scheibenförmigen Blenden eine Montage der der Relais-Optik nächstliegenden Blende an der Relais-Optik vorteilhaft. Unabhängig von der Blendenform kann die Blende beispielsweise auf die Relais-Optik geklebt werden.

In der Ausgestaltung mit Relais-Optik können auch mehrere Relais-Optiken kaskadenförmig eingesetzt werden, was Vorteile bei der Konstruktion der optischen Vorrichtung mit sich bringt, wenn sich die Montage mehrerer Blenden hintereinander als schwierig herausstellt. Um dies zu realisieren, umfasst die optische Vorrichtung eine erste und eine zweite Relais-Optik, die zwischen dem ersten Brennpunkt und der Detektoreinheit angeordnet sind,

wobei die erste Relais-Optik dazu ausgebildet ist, den vom ersten Brennpunkt aus divergierenden fernzielreflektierten Lichtstrahl auf einen zweiten Brennpunkt zu fokussieren, und die zweite Relais-Optik dazu ausgebildet ist, den vom zweiten Brennpunkt aus divergierenden fernzielreflektierten Lichtstrahl auf einen dritten Brennpunkt zu fokussieren,

wobei die genannte Blende zwischen dem ersten Brennpunkt und der ersten Relais-Optik und die genannte weitere Blende zwischen dem zweiten Brennpunkt und der zweiten Relais-Optik angeordnet ist, und

wobei die Detektoreinheit im Wesentlichen im dritten Brennpunkt angeordnet ist.

In einer zweiten Ausgestaltung der Erfindung ist die Detektoreinheit in jenem Bereich angeordnet, in dem der fernzielreflektierte Lichtstrahl vom ersten Brennpunkt aus divergiert, wobei die Detektoreinheit eine Detektionsfläche hat, die sich über den gesamten Querschnitt des fernzielreflektierten Lichtstrahls erstreckt. In dieser Ausgestaltung kann auf eine Relais-Optik verzichtet werden, wobei jedoch für die Detektoreinheit eine größere Detektionsfläche erforderlich ist als in der ersten Ausgestaltung. Großflächige Detektoreinheiten sind zwar kostspieliger, jedoch kann die Länge der optischen Vorrichtung reduziert werden.

Um die erforderliche Detektionsfläche zu minimieren, kann die Blende an der Detektoreinheit montiert sein. Da die Blende in einem vorgegebenen Abstand zum ersten Brennpunkt angeordnet wird, kann durch die Montage der Detektoreinheit an der Blende die Detektorfläche kleiner gehalten werden. Zudem vereinfacht sich auch die Montage der Blende.

Bevorzugt ist bzw. sind der Abstand der Blende vom ersten Brennpunkt und/oder die Fläche der Blende im genannten Querschnitt und/oder die Position der Fläche der Blende im genannten Querschnitt veränderbar. Dies erlaubt eine Kalibrierung und individuelle Konfiguration der Blende, wodurch eine einzige optische Vorrichtung an unterschiedliche Einsatzgebiete und Anwendungen angepasst werden kann.

Weiters bevorzugt umfasst die optische Vorrichtung dazu auch einen Motor, der dazu ausgebildet ist, den genannten Abstand und/oder die genannte Fläche und/oder die Position der Fläche der Blende im genannten Querschnitt zu verändern. Dies erlaubt eine automatische Kalibrierung oder Konfiguration der Blende auch während des Betriebs des Laserscanners. Dies ist z.B. besonders günstig, wenn die optische Vorrichtung in einem Laserscanner verwendet wird, der im Betrieb unzugänglich ist, beispielsweise in einem unbemannten Luftfahrzeug (Unmanned Aerial Vehicle, UAV).

Die Erfindung wird nachfolgend anhand von in den beigeschlossenen Zeichnungen dargestellten Ausführungsbeispielen näher erläutert. In den Zeichnungen zeigen:

Fig. 1 eine optische Vorrichtung zur Laserentfernungsmessung nach dem Stand der Technik in einer schematischen Seitenansicht;

Fig. 2 ein Diagramm der entfernungsabhängigen relativen Empfangsleistung der Vorrichtung von Fig. 1;

Fig. 3 eine erste Ausführungsform einer erfindungsgemäßen optischen Vorrichtung zur Laserentfernungsmessung mit einer Scheibenblende in einer schematischen Seitenansicht;

Fig. 4 ein Diagramm der entfernungsabhängigen relativen Empfangsleistung der Vorrichtung von Fig. 3;

Fig. 5 eine zweite Ausführungsform der erfindungsgemäßen optischen Vorrichtung zur Laserentfernungsmessung mit zwei Scheibenblenden in einer schematischen Seitenansicht;

Fig. 6 ein Diagramm der entfernungsabhängigen relativen Empfangsleistung der Vorrichtung von Fig. 5;

Fig. 7 eine dritte Ausführungsform der erfindungsgemäßen optischen Vorrichtung zur Laserentfernungsmessung mit einer Kegelblende in einer schematischen Seitenansicht;

Fig. 8 ein Diagramm der entfernungsabhängigen relativen Empfangsleistung der Vorrichtung von Fig. 7;

Fig. 9 eine vierte Ausführungsform der erfindungsgemäßen optischen Vorrichtung zur Laserentfernungsmessung mit einer schiefen Kegelblende in einer schematischen Seitenansicht;

Fig. 10 eine fünfte Ausführungsform der erfindungsgemäßen optischen Vorrichtung zur Laserentfernungsmessung mit einer Scheibenblende und einer versetzten Lichtquelle in einer schematischen Seitenansicht;

Fig. 11 eine sechste Ausführungsform der erfindungsgemäßen optischen Vorrichtung zur Laserentfernungsmessung mit kaskadierten Relais-Optiken; und

Fig. 12 eine siebte Ausführungsform der erfindungsgemäßen optischen Vorrichtung zur Laserentfernungsmessung mit einer großflächigen Detektoreinheit.

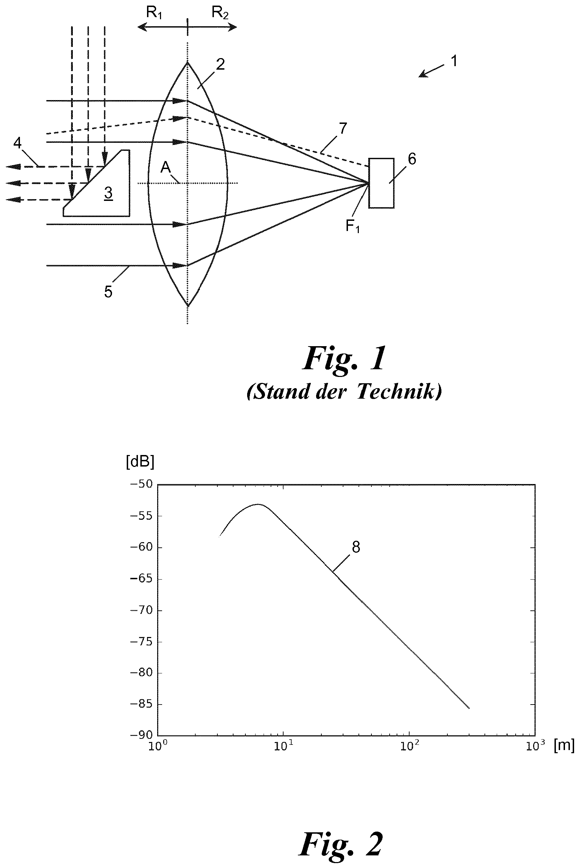

Fig. 1 zeigt eine optische Vorrichtung 1 gemäß dem Stand der Technik. Bei dieser optischen Vorrichtung 1, die typischerweise bei der Laserentfernungsmessung eingesetzt wird, sendet eine zentral vor einer Primärlinse 2 liegende Lichtquelle 3 einen Lichtstrahl 4 aus.

Die Lichtquelle 3 ist in der vorliegenden Ausführungsform ein Spiegel, der von einer weiteren Einheit bereitgestelltes Licht, z.B. Laserlicht, in eine vorbestimmte Richtung $R_1$ aussendet, die im Wesentlichen parallel zur optischen Achse A der Primärlinse 2 ist. Alternativ kann die Lichtquelle 2 auch unmittelbar eine lichterzeugende Laserdiode, Lampe oder dergleichen sein.

Wenn der ausgesandte Lichtstrahl 4 von einem Fernziel (nicht dargestellt) reflektiert wird, fällt der fernzielreflektierte Lichtstrahl 5 stets im Wesentlichen in der zur Aussenderichtung $R_1$ entgegengesetzten Richtung $R_2$ parallel zur optischen Achse A auf die Primärlinse 2 ein, was durch die in Relation zur Größe der Primärlinse 2 weite Entfernung zwischen Fernziel und Primärlinse 2 bedingt ist.

Die Primärlinse 2 ist derart ausgebildet, z.B. durch Auswahl eines entsprechenden Krümmungsradius, dass sie den fernzielreflektierten Lichtstrahl 5 in einem ersten Brennpunkt $F_1$ fokussiert. Die Primärlinse 2 kann zu diesem Zweck beispielsweise als eine konvexe Linse 2 oder als anderes optisches Element ausgebildet sein, das dazu in der Lage ist, einfallende Lichtstrahlen zu bündeln.

Zur Detektion des fernzielreflektierten Lichtstrahls 5 befindet sich ein Detektor 6 im ersten Brennpunkt $F_1$. Der Detektor 6 ist beispielsweise eine Lawinenphotodiode ("avalanche photodiode", APD), die als hochempfindliche Photodiode eingesetzt wird und somit den fernzielreflektierten Lichtstrahl 5 auch bei geringer Lichtleistung detektieren kann.

Fig. 1 zeigt weiters einen nahzielreflektierten Lichtstrahl 7, der von einem unerwünschten Nahziel, z.B. einer Luftunreinheit, einem Insekt od.dgl., reflektiert wurde. Der nahzielreflektierte Lichtstrahl 7 fällt schräg zur optischen Achse A auf die Primärlinse 2 ein, was durch die in Relation zur Größe der Primärlinse 2 geringe Entfernung zwischen Nahziel und Primärlinse 2 bedingt ist.

Unter nahzielreflektierten Lichtstrahlen 7 werden jene Lichtstrahlen verstanden, die von der Lichtquelle 4 ausgesandt und von einem Nahziel reflektiert wurden, das in einem Abstand von bevorzugt weniger als 500 m, besonders bevorzugt weniger als 100 m, ganz besonders bevorzugt weniger als 30 m, von der Primärlinse 2 liegt. Im Gegensatz dazu werden unter fernzielreflektierten Lichtstrahlen 5 jene Lichtstrahlen verstanden, die von der Lichtquelle 4 ausgesandt und von Fernzielen außerhalb dieser Abstände reflektiert wurden.

Durch die schräge Einfallsrichtung des nahzielreflektierten Lichtstrahls 7 auf die Primärlinse 2 wird dieser in der Regel nicht auf den Brennpunkt $F_1$ fokussiert.

Je nach Einfallswinkel und Einfallsposition auf der Primärlinse 2 wird der nahzielreflektierte Lichtstrahl 7 jedoch auf den Detektor 6 projiziert, der dessen Anwesenheit registriert und somit ein "falsches", d.h. nicht mit dem zu detektierenden Fernziel korreliertes, Messergebnis ausgibt.

Fig. 2 zeigt einen für die optische Vorrichtung 1 typischen Amplitudenverlauf 8, wobei auf der Ordinate die vom Detektor 6 registrierte relative Empfangsleistung in [dB] und auf der Abszisse die Zielentfernung in [m] aufgetragen ist. Es ist ersichtlich, dass die Empfangsempfindlichkeit der Vorrichtung 1 gerade in jenem Nahbereich von ca. 5 m ein Maximum aufweist, in dem Messergebnisse von störenden Nahzielen unerwünscht sind.

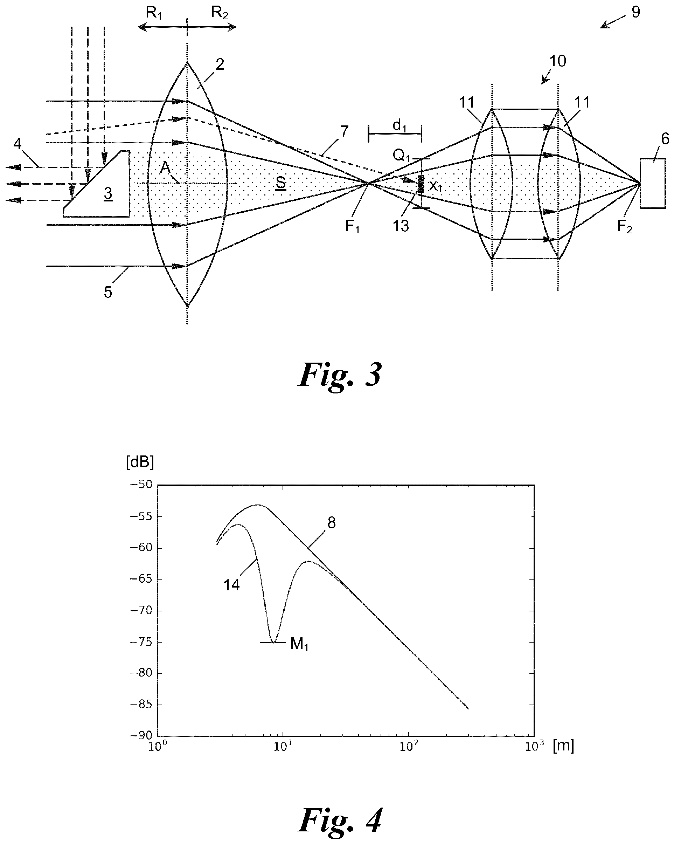

Fig. 3 zeigt eine erste Ausführungsform einer erfindungsgemäßen optischen Vorrichtung 9, wobei in Bezug auf Fig. 1 verwendete Bezugszeichen für gleiche Komponenten stehen. Insbesondere sind die Winkelverhältnisse der ausgesandten, fernzielreflektierten und nahzielreflektierten Lichtstrahlen 4, 5, 7 dieselben, wobei der Detektor 6 jedoch eine andere Position einnimmt, wie nachstehend erläutert wird.

Bei der Ausführungsform von Fig. 3 ist eine Relais-Optik 10 derart angeordnet, dass der erste Brennpunkt $F_1$ zwischen der Primärlinse 2 und der Relais-Optik 10 liegt, d.h. die Relais-Optik 10 ist in Richtung $R_2$ des fernzielreflektierten Lichtstrahls 5 hinter dem ersten Brennpunkt $F_1$ angeordnet.

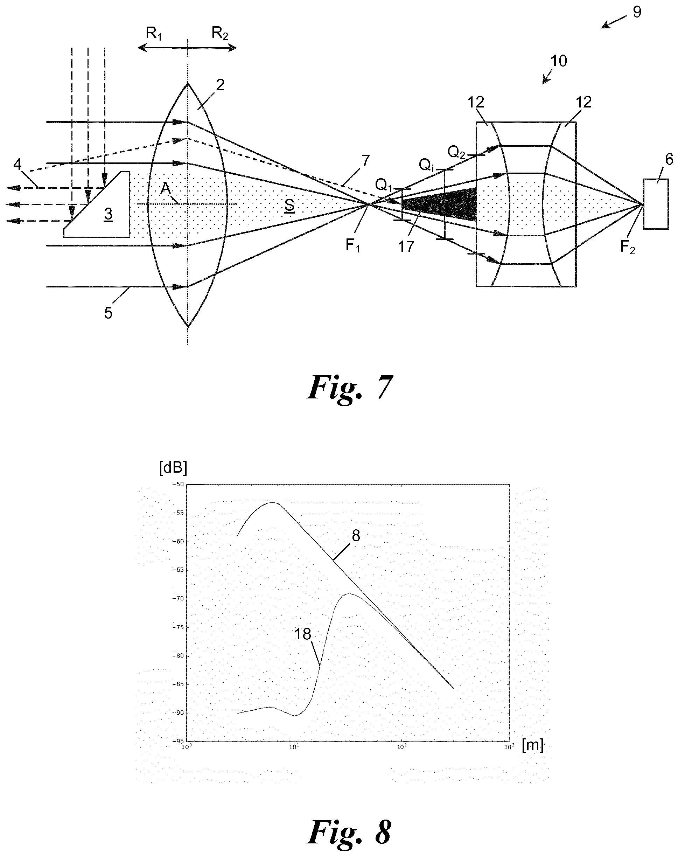

Die Relais-Optik 10 ist dazu ausgebildet, den vom ersten Brennpunkt $F_1$ aus divergierenden fernzielreflektierten Lichtstrahl 5 auf einen zweiten Brennpunkt $F_2$ zu fokussieren, in welchem sich bei der optischen Vorrichtung 9 der Detektor 6 befindet. Die Relais-Optik 10 kann beispielsweise als konvexe Linse, als zwei zusammengesetzte konvexe Linsen 11 wie in Fig. 3 gezeigt oder als zwei plan-konvexe Linsen 12 wie in Fig. 7 gezeigt ausgebildet sein. Wird eine Relais-Optik 10 mit zwei Linsen 11, 12 eingesetzt, kann zusätzlich ein Filter, z.B. ein Interferenzfilter, zwischen den beiden Linsen 11, 12 eingesetzt werden.

Um nahzielreflektierte Lichtstrahlen 7 zu blockieren, ist eine Blende 13 innerhalb eines zur optischen Achse A normalen Querschnitts $Q_1$ des fernzielreflektierten Lichtstrahls 5 zwischen dem ersten Brennpunkt $F_1$ und der Relais-Optik 10 angeordnet. Die Blende 13 ist lichtundurchlässig und weist bevorzugt keine Löcher auf.

Wie in Fig. 3 gezeigt ist die Lichtquelle 3 wie in der Laservermessungstechnik üblich in Strahlrichtung des fernzielreflektierten Lichtstrahls 5 gesehen in dessen Strahlengang zentral vor der Primärlinse 2 angeordnet. Als Strahlengang des fernzielreflektierten Lichtstrahls 5 wird hierin jener Bereich verstanden, der vom fernzielreflektierten Lichtstrahl 5 durchlaufen wird.

Durch den Umstand, dass die Lichtquelle 3 im Strahlengang vor der Primärlinse 2 angeordnet ist, wirft die Lichtquelle 3 einen Schatten S im fernzielreflektierten Lichtstrahl 5. Bereits durch die Anordnung der Lichtquelle 3 vor der Primärlinse 2 und den dadurch hervorgerufenen Schatten S ist somit eine Reduktion der vom Detektor 6 empfangbaren Menge an fernzielreflektiertem Licht bedingt. Um die Leistungsfähigkeit der optischen Vorrichtung 9 zum Detektieren von fernzielreflektiertem Licht nicht weiter zu beeinträchtigen, liegt die Blende 13 im genannten Schatten S der Lichtquelle 3.

Die Blende 13 ist im Ausführungsbeispiel von Fig. 3 eine Scheibe, d.h. sie hat eine geringe Dicke in Strahlrichtung $R_2$ des fernzielreflektierten Lichtstrahls 5 gesehen. Die Form der Scheibe im Querschnitt $Q_1$ kann beliebig sein, z.B. rechteckig, kreisrund oder oval, oder aber auch an die Form des Schattens S der Lichtquelle 3 und somit an diese selbst angepasst. Wirft die Lichtquelle 3 beispielsweise einen runden Schatten S im Querschnitt $Q_1$, so kann auch die Form der Blende 13 im Querschnitt $Q_1$ rund sein.

Die Fläche $x_1$ der Blende 13 im Querschnitt $Q_1$ beträgt beispielsweise 0,1 - 50 %, bevorzugt 0,5 - 25 %, besonders bevorzugt 1 - 10 %, des genannten Querschnitts $Q_1$ des fernzielreflektierten Lichtstrahls 5 und kann prinzipiell unabhängig vom Schatten S gewählt werden. Alternativ kann die Fläche $x_1$ der Blende 13 im Querschnitt $Q_1$ an den von der Lichtquelle 3 geworfenen Schatten S angepasst werden, beispielsweise derart, dass die Blende 13 den Schatten S im Querschnitt $Q_1$ vollständig einnimmt. Alternativ kann die Fläche $x_1$ der Blende 3 im Querschnitt $Q_1$ auch in einem vorbestimmten Verhältnis zum Schatten S stehen und beispielsweise 50 % des Schattens S einnehmen.

In einer weiteren Ausführungsform kann der Durchmesser der Blende 13 auch an die Größe des im Querschnitt $Q_1$ auftretenden Abbilds jenes Brennflecks angepasst werden, der sich auf einem in einer vorgegebenen Entfernung R von der Primärlinse 2 liegenden, ausgedehnten Nahziel ergibt, wenn der Strahldurchmesser und die Strahlaufweitung des ausgesandten Lichtstrahls 4 über die Entfernung R berücksichtigt werden.

Um die Reflexion eines sich in der Entfernung R befindlichen Nahziels vollständig auszublenden, entspricht der Durchmesser der Blende 13 dabei zumindest einer Bildgröße B mit

$$B = G_R * d_1 / f_1,$$

wobei $G_R$ der Strahldurchmesser des ausgesandten Lichtstrahls 4 in der vorbestimmten Entfernung R, $d_1$ der Abstand der Blende 13 zum ersten Brennpunkt $F_1$ und $f_1$ der Abstand der Primärlinse 2 zum ersten Brennpunkt $F_1$ ist. Dies ergibt sich aus der Linsengleichung für eine dünne Primärlinse 2. Der Durchmesser der Blende 13 kann auch 50 - 100 % oder 80 - 100 % der genannten Bildgröße B betragen, um nur einen vorbestimmten Anteil an nahzielreflektiertem Licht zu blockieren.

Wenn die Blende 13 als Scheibe realisiert wird, kann diese beispielsweise ein von Stegen getragenes Plättchen sein und so zwischen die Primärlinse 2 und die Relais-Optik 10 eingebracht werden. Alternativ kann die Blende 13 eine von einer Glasplatte getragene opake Struktur sein, die beispielsweise in die Glasplatte eingeätzt oder auf diese aufgeklebt ist.

Die Blende 13 hat den Zweck, nahzielreflektierte Lichtstrahlen 7 zu blockieren, wie in Fig. 3 dargestellt ist. Nahzielreflektierte Lichtstrahlen 7 kreuzen die optische Achse A in der Regel zwischen dem ersten Brennpunkt $F_1$ und der Relais-Optik 10, so dass diese auf die Blende 13 treffen und damit blockiert werden. Wie zuvor beschrieben werden die fernzielreflektierten Lichtstrahlen 5 von dieser Anordnung der Blende 13 nicht beeinträchtigt, da die Blende 13 im Schatten S der Lichtquelle 3 angeordnet ist.

Fig. 4 zeigt den Effekt der Blende 13 im Detail. Analog zu Fig. 2 ist in Fig. 4 auf der Ordinate die relative Empfangsleistung in [dB] und auf der Abszisse die Zielentfernung in [m] aufgetragen. Zur Referenz ist der typische Amplitudenverlauf 8 der optischen Vorrichtung 1 nach dem Stand der Technik von Fig. 1 auch in Fig. 4 dargestellt.

Der Amplitudenverlauf 14 zeigt die Empfangsempfindlichkeit der optischen Vorrichtung 9 von Fig. 3 mit der Blende 13 zwischen dem ersten Brennpunkt $F_1$ und der Relais-Optik 6. Die Blende 13 ist in einem Abstand $d_1$ (Fig. 3) vom ersten Brennpunkt $F_1$ angeordnet. Auf diesen Abstand $d_1$ werden von der Primärlinse 2 beispielsweise Lichtstrahlen 5 gebrochen, die von Nahzielen reflektiert werden, welche in einem Abstand von 8 m vor der Primärlinse 2 liegen. Dies verursacht ein Minimum $M_1$ des Amplitudenverlaufs 14 für die Zielentfernung von 8 m. Die Form und relative Tiefe des Minimums $M_1$ ist von der Form und Größe der Fläche $x_1$ der Blende 13 im Querschnitt $Q_1$ abhängig und kann durch Versuche experimentell oder durch Simulationen rechnerisch ermittelt werden.

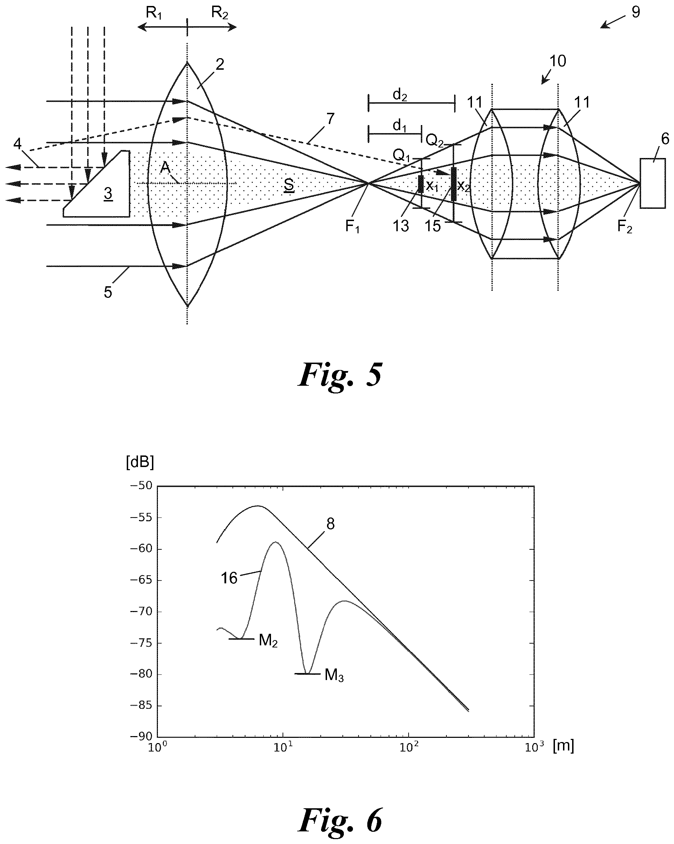

Fig. 5 zeigt eine Variante der optischen Vorrichtung 9 von Fig. 3, bei der zusätzlich zur Blende 13 eine weitere Blende 15 innerhalb eines weiteren zur optischen Achse A normalen Querschnitts $Q_2$ des fernzielreflektierten Lichtstrahls 5 zwischen dem ersten Brennpunkt $F_1$ und der Relais-Optik 10 angeordnet ist. Die weitere Blende 15 ist in einem Abstand $d_2$ vom ersten Brennpunkt $F_1$ angeordnet, wobei die Abstände $d_1$ und $d_2$ unterschiedlich sind.

Die weitere Blende 15 kann strukturell genau gleich ausgebildet sein wie die Blende 13, z.B. jeweils als Scheibe, und auch wie die Blende 13 gefertigt sein, z.B. als Plättchen mit Stegen oder als eine von einer Glasplatte getragene opake Struktur. Die Blende 13 und die weitere Blende 15 können auch im jeweiligen Querschnitt $Q_1$, $Q_2$ dieselbe oder eine unterschiedliche Form aufweisen, z.B. kreisrund, oval oder rechteckig.

Auch die Flächen $x_1$, $x_2$ der Blende 13 und der weiteren Blende 15 können im jeweiligen Querschnitt $Q_1$, $Q_2$ gleich groß sein. Alternativ weisen die Blenden wie in Fig. 5 gezeigt im Querschnitt unterschiedliche Flächen $x_1$, $x_2$ auf, wobei ihre Fläche $x_1$, $x_2$ umso größer ist, je näher die jeweilige Blende 13, 15 zur Relais-Optik 10 angeordnet ist. Bevorzugt folgt dabei die Größe der jeweiligen Fläche $x_1$, $x_2$ dem Strahlengang des fernzielreflektierten Lichtstrahls 5 zwischen dem ersten Brennpunkt $F_1$ und der Relais-Optik 10, sodass das Verhältnis zwischen Abstand $d_1$, $d_2$ und Fläche $x_1$, $x_2$ im Querschnitt $Q_1$, $Q_2$ konstant ist, d.h. $d_1/x_1 = d_2/x_2$.

Die dem ersten Brennpunkt $F_1$ nächstliegende Blende 13 ist in einem Abstand von mindestens 100 $\mu$m von dem ersten Brennpunkt $F_1$ angeordnet, um zu gewährleisten, dass der fernzielreflektierte Lichtstrahl 5 nicht von der Blende 13 blockiert wird. Dies trifft auch auf die Ausführungsform von Fig. 3 zu.

Fig. 6 zeigt, analog zu den Fig. 2 und Fig. 4, auf der Ordinate die relative Empfangsleistung in [dB] und auf der Abszisse die Zielentfernung in [m], wobei zusätzlich zum Amplitudenverlauf 16 der optischen Vorrichtung 9 von Fig. 5 zur Referenz der Amplitudenverlauf 8 der optischen Vorrichtung 1 von Fig. 1 dargestellt ist.

In dem Beispiel der Fig. 5 und 6 wurde der Abstand $d_1$ der Blende 13 derart gewählt, dass dieser einer Zielentfernung von 5 m entspricht, und der Abstand $d_2$ derart, dass er einer Zielentfernung von 15 m entspricht. Dies verursacht zwei Minima $M_2$, $M_3$ des Amplitudenverlaufs 16 für die Zielentfernungen von 5 m und 15 m.

Fig. 7 zeigt eine weitere Variante der optischen Vorrichtung 9 von Fig. 3, bei der anstatt einer scheibenförmigen Blende 13 eine Blende 17 in Kegelstumpfform zwischen dem ersten Brennpunkt $F_1$ und der Relais-Optik 10 angeordnet ist. Die Form der Blende 15 erweitert sich hier in Strahlrichtung $R_2$ des fernzielreflektierten Lichtstrahls 5 gesehen und könnte auch als Kegelform ausgebildet sein. Alternativ könnte anstelle der Kegel- oder Kegelstumpfform auch eine sich nicht erweiternde Stabform eingesetzt werden.

Der Öffnungswinkel (Kegelspitzenwinkel) der Kegel- oder Kegelstumpfform der Blende 17 kann grundsätzlich beliebig gewählt werden. Im Ausführungsbeispiel von Fig. 7 wurde der Öffnungswinkel an den Strahlengang des fernzielreflektierten Lichtstrahls 5 angepasst.

Die kegelförmige Blende 17 von Fig. 7 ist somit nicht nur innerhalb eines Querschnitts, sondern gleich innerhalb eines Kontinuums von Querschnitten $Q_i$ des fernzielreflektierten Lichtstrahls 5 zwischen dem ersten Brennpunkt $F_1$ und der Relais-Optik 10 angeordnet. In diesem Sinne kann die Blende 17 in Kegel- oder Kegelstumpfform dadurch definiert werden, dass sie innerhalb von Querschnitten $Q_i$ zwischen einem ersten Querschnitt $Q_1$ in einem Abstand $d_1$ vom ersten Brennpunkt $F_1$ und einem letzten Querschnitt $Q_2$ in einem Abstand $d_2$ vom ersten Brennpunkt $F_1$ angeordnet ist.

Der erste Querschnitt $Q_1$ fällt nicht mit dem ersten Brennpunkt $F_1$ zusammen, sondern ist in einem Mindestabstand $d_1$ von diesem beabstandet, um zu gewährleisten, dass der fernzielreflektierte Lichtstrahl 5 nicht von der Blende 17 blockiert wird. Der erste Querschnitt $Q_1$ liegt beispielsweise in einem Abstand $d_1$ von 100 $\mu$m vom ersten Brennpunkt $F_1$.

Die Ausführungsform von Fig. 7 ist bezüglich der für die Fig. 3 und 5 erläuterten Varianten keinen Einschränkungen unterworfen. So können beispielsweise zwei Blenden 17 in Kegel- oder Kegelstumpfform eingesetzt, diese mittels Stegen montiert oder als von (dicken) Glasplatten getragene opake Strukturen ausgebildet werden. Wird die Blende 17 als Kegel oder Kegelstumpf ausgebildet, bietet es sich an, die Blende 17 an der Relais-Optik 10 zu montieren. Dazu kann beispielsweise die Basis des Kegels oder Kegelstumpfs der Blende 17 an die Relais-Optik 10 geklebt werden, die dazu bevorzugt an der Seite der Blende 17 eben ausgebildet werden kann.

In gleicher Weise könnte aber auch die der Relais-Optik 10 nächstliegende scheibenförmige Blende 13, 15 der Fig. 3 und 5 direkt an der Relais-Optik 10 montiert werden, z.B. durch Aufkleben.

Fig. 8 zeigt, analog zu den Fig. 2, 4 und 6, den Amplitudenverlauf 18 der optischen Vorrichtung 9 von Fig. 7, wobei auf der Ordinate die relative Empfangsleistung in [dB] und auf der Abszisse die Zielentfernung in [m] aufgetragen ist und zur Referenz der Amplitudenverlauf 8 der optischen Vorrichtung 1 von Fig. 1 dargestellt ist.

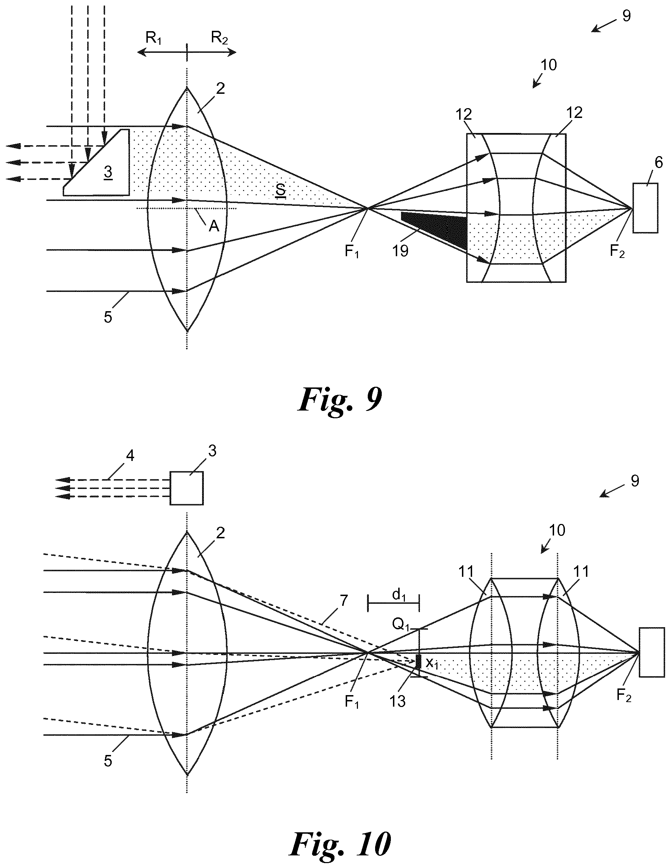

Es ist aus dem Amplitudenverlauf 18 ersichtlich, dass im Gegensatz zu den Amplitudenverläufen 14 und 16 der Fig. 2 und 4 die kegel- bzw. kegelstumpfförmige Blende 17 von Fig. 9 keine diskreten Minima mehr ausbildet, sondern ein im Wesentlichen kontinuierliches Minimum auf der Höhe von -90 dB.

Die Fig. 9 und 10 zeigen weitere Ausführungsformen, gemäß denen die Lichtquelle 3 dezentral vor der Primärlinse 2 (Fig. 9) bzw. überhaupt nicht vor der Primärlinse 2 (Fig. 10) angeordnet ist.

Aus Fig. 9 ist ersichtlich, dass eine bezüglich der optischen Achse A asymmetrisch angeordnete Lichtquelle 2 einen asymmetrischen Schatten S wirft. Wenn hier eine Blende 19 im Schatten S der Lichtquelle 3 angeordnet wird, wird ihre Form dementsprechend dem Schatten S angepasst. Dazu kann eine Blende 19 eingesetzt werden, die als um die optische Achse A asymmetrisch angeordnete ovale Scheibe oder als schiefer Kegel bzw. schiefer Kegelstumpf, wie in Fig. 9 gezeigt, ausgebildet ist. Bei derartigen Ausführungsformen wird die Empfangsempfindlichkeit der Vorrichtung 9 für fernzielreflektierte Lichtstrahlen 5 durch die Blende 19 nicht beeinträchtigt, wenn diese im Schatten S angeordnet ist. Jedoch blockiert die Blende 19 zumindest einen Anteil an nahzielreflektierten Lichtstrahlen 7, sodass die Nahbereichsempfindlichkeit der optischen Vorrichtung 9 reduziert wird.

Fig. 10 zeigt eine Ausführungsform, bei der die Lichtquelle 3 neben der Primärlinse 2 und nicht vor dieser angeordnet ist. Durch den Versatz der Lichtquelle 3 in Bezug auf die Primärachse A fallen nahzielreflektierte Lichtstrahlen nicht parallel zur optischen Achse A ein. Um diesen Effekt zu kompensieren, kann die Blende 13 bezüglich der Primärlinse 2 außermittig angeordnet sein, um einen größeren Anteil an nahzielreflektierten Lichtstrahlen 7 zu blockieren, wie schematisch in Fig. 10 dargestellt.

Es ist unmittelbar ersichtlich, dass in dieser Ausführungsform kein Schatten S durch die Lichtquelle 3 geworfen wird. Wird jedoch die Blende gleich wie in Fig. 3 angeordnet, wird - abgesehen vom oben erläuterten Effekt der außermittig einfallenden nahzielreflektierten Lichtstrahlen 7 - überraschenderweise im Wesentlichen derselbe Amplitudenverlauf 14 wie bei der Ausführungsformen der Fig. 3 und 4 erzielt, bei denen die Blende 13 den Schatten S im Querschnitt $Q_1$ vollständig einnahm. Dies ist dadurch bedingt, dass die fernzielreflektierten Lichtstrahlen 5 diesmal nicht von der Lichtquelle 3, sondern von der Blende 13 blockiert werden.

Anstelle der Scheibenform der Blende 13 von Fig. 10 kann auch hier wieder jede andere Blendenform wie zuvor für die Fig. 3 bis 9 beschrieben eingesetzt werden, und es werden entsprechend gleiche Amplitudenverläufe erzielt, wie wenn die Blende im Schatten der Lichtquelle 3 angeordnet wäre.

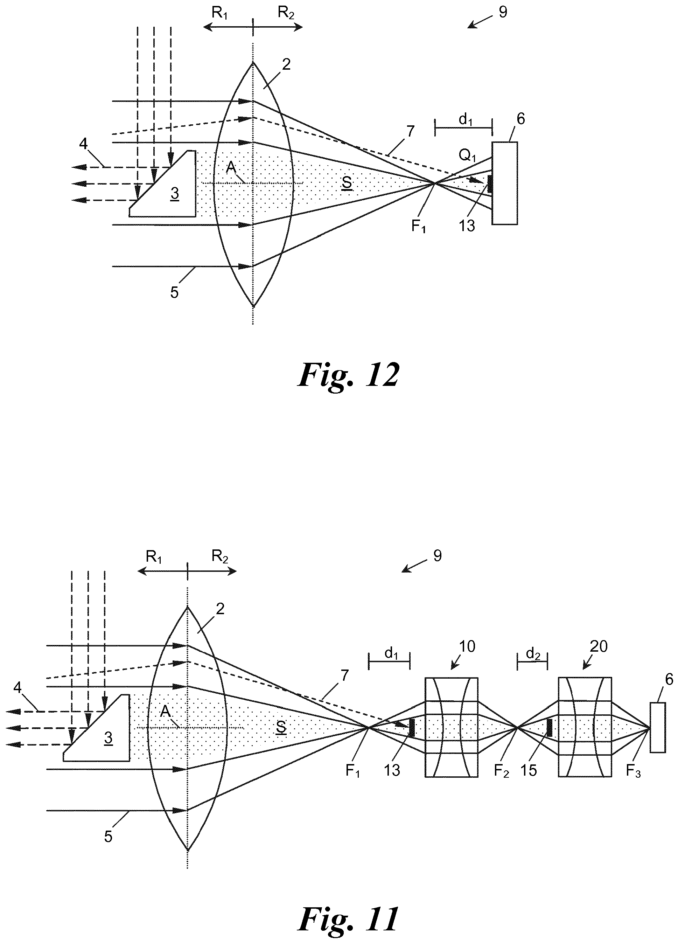

Fig. 11 zeigt eine Ausführungsform, bei der mehrere Relais-Optiken 10, 20 kaskadenförmig angeordnet sind, so dass für jede Relais-Optik 10, 20 eine eigene Blende 13, 15 vorgesehen sein kann.

In dieser Ausführungsform fokussiert die erste Relais-Optik 10 den vom ersten Brennpunkt $F_1$ aus divergierenden fernzielreflektierten Lichtstrahl 5 auf einen zweiten Brennpunkt $F_2$, und die zweite Relais-Optik 20 fokussiert den vom zweiten Brennpunkt $F_2$ aus divergierenden fernzielreflektierten Lichtstrahl 5 auf einen dritten Brennpunkt $F_3$, wobei die Detektoreinheit 6 im Wesentlichen im dritten Brennpunkt $F_3$ angeordnet ist, wodurch sich die kaskadenförmige Anordnung ergibt.

Die Blenden sind hier derart angeordnet, dass die genannte Blende 13 zwischen dem ersten Brennpunkt $F_1$ und der ersten Relais-Optik 10 und die genannte weitere Blende 15 zwischen dem zweiten Brennpunkt $F_2$ und der zweiten Relais-Optik 20 angeordnet ist. Die Abstände $d_1$, $d_2$ der Blenden 13, 15 von den jeweils nächstliegenden Brennpunkten $F_1$, $F_2$ können dabei derart gewählt werden, dass die Blenden 13, 15 nahzielreflektierte Lichtstrahlen 7 aus unterschiedlichen Zielentfernungen vor der Primärlinse 2 unterdrücken.

In allen Ausführungsformen können Scheiben-, Kegel- oder Kegelstumpfblenden eingesetzt werden. Bevorzugt werden jedoch Scheibenblenden eingesetzt und der Durchmesser der Blenden kann vom jeweiligen Abstand $d_1$, $d_2$ der Blende 13, 15 zum jeweils nächstliegenden Brennpunkt $F_1$, $F_2$ abhängig gemacht werden.

Es versteht sich, dass die gezeigte Kaskadenform auch erweitert werden kann, indem anstatt zweier Relais-Optiken 10, 20 mit jeweils einer Blende 13, 15 auch mehr als zwei Relais-Optiken mit jeweils einer Blende 13 eingesetzt werden. Zudem ist es möglich, zumindest für eine der Relais-Optiken 10, 20 mehr als eine Blende zu verwenden.

Die verschiedenen Relais-Optiken 10, 20 können gleich ausgestaltet sein oder auch unterschiedlich, z.B. eine mit konvexen Linsen wie in Fig. 3 und die andere/n mit plan-konvexen wie in Fig. 7, und/oder mit unterschiedlichen Brennweiten.

Fig. 12 zeigt eine Variante der optischen Vorrichtung 1 von Fig. 3, bei der keine Relais-Optik 10 eingesetzt wird. Stattdessen wird die Detektoreinheit 6 in jenem Bereich angeordnet, in dem der fernzielreflektierte Lichtstrahl 5 vom ersten Brennpunkt $F_1$ aus divergiert, wobei die Detektoreinheit 6 eine Detektionsfläche hat, die sich über den gesamten Querschnitt des fernzielreflektierten Lichtstrahls 5 erstreckt und somit eine größere Detektionsfläche aufweist als die Detektoreinheit 6 der Ausführungsform von Fig. 3.

Wenn die Blende 13 direkt an der Detektoreinheit 6 montiert wird, kann der Abstand zwischen dem ersten Brennpunkt $F_1$ und der Detektoreinheit 6 im Wesentlichen auf den Abstand $d_1$ zwischen dem ersten Brennpunkt $F_1$ und der Blende 13 verringert werden. Prinzipiell kann die Detektoreinheit 6 jedoch auch von der Blende 13 beabstandet sein. Die Ausführungsform von Fig. 11 mit einer großflächigen Detektoreinheit eignet sich im Allgemeinen auch für Blenden 13 mit Kegel- bzw. Kegelstumpfform wie in den Fig. 7 und 9 gezeigt.

In allen genannten Ausführungsformen können zudem der Abstand $d_1$ der Blende 13, 15, 17, 19 vom ersten Brennpunkt $F_1$ und/oder die Fläche $x_1$, $x_2$ der Blende 13, 15, 17, 19 im genannten Querschnitt $Q_1$, $Q_2$ und/oder die Position der Fläche $x_1$, $x_2$ der Blende 13, 15, 17, 19 im genannten Querschnitt $Q_1$, $Q_2$ veränderbar sein, beispielsweise indem die Blende 13, 15, 17, 19 entlang der optischen Achse A - oder normal zu dieser - manuell verschiebbar angeordnet ist.

Wenn eine Scheibenblende eingesetzt wird, kann diese beispielsweise aus mehreren sichelförmigen Lamellen zusammengesetzt werden, die durch eine Drehbewegung die Fläche der Scheibenblende vergrößern bzw. verkleinern lassen.

Kegel- oder Kegelstumpfblenden können mit einem veränderbaren Öffnungswinkel ausgestaltet werden, oder es können alternativ Teleskopstangen eingesetzt werden, wodurch sich je nach Teleskopierzustand auch die Fläche der Blende im jeweiligen Querschnitt $Q_i$ ändert.

Anstatt manuell kann die Blende 13, 15, 17, 19 auch durch einen Motor bewegt werden, der den genannten Abstand $d_1$, $d_2$, die genannte Fläche $x_1$, $x_2$ bzw. die genannte Position verändert.

In allen genannten Ausführungsformen kann die Blende 13, 15, 17, 19 den äußeren Rand des Querschnitts $Q_i$ frei lassen, so dass die gesamte Fläche $x_1$ der Blende 13, 15, 17, 19 innerhalb des genannten Querschnitts $Q_i$ liegt. Die Blende 13, 15, 17, 19 kann dabei in einem vorbestimmten Mindestabstand vom Umriss des Querschnitts $Q_i$ angeordnet sein. Alternativ kann die Blende 13, 15, 17, 19 auch seitlich von außen in den Querschnitt $Q_i$ hineinragen. In diesen Varianten lässt die Blende 13, 15, 17, 19 beispielsweise zumindest 50%, bevorzugt zumindest 70%, besonders bevorzugt zumindest 90%, des Umrisses des Querschnitts $Q_i$ frei. Die Blende 13, 15, 17, 19 kann weiters lochfrei und/oder derart angeordnet sein, dass sie die optische Achse A schneidet.

Allgemein gesprochen ist die Blende 13, 15, 17, 19 derart angeordnet und/oder ausgebildet, dass sie einen größeren Anteil von nahzielreflektierten Lichtstrahlen 7 als von fernzielreflektierten Lichtstrahlen 5 blockiert.

Die Erfindung ist demgemäß nicht auf die dargestellten Ausführungsformen beschränkt, sondern umfasst alle Varianten, Modifikationen und deren Kombinationen, die in den Rahmen der angeschlossenen Ansprüche fallen.

**Patentansprüche**

1. Optische Vorrichtung (9) zum Detektieren eines an einem Fernziel reflektierten Lichtstrahls (5) unter Dämpfung der Nahbereichsempfindlichkeit der Vorrichtung, umfassend
   eine Lichtquelle (3), die dazu ausgebildet ist, den Lichtstrahl (4) in eine vorbestimmte Richtung ($R_1$) auf das Fernziel auszusenden,
   eine Primärlinse (2), deren optische Achse (A) im Wesentlichen parallel zur genannten vorbestimmten Richtung ($R_1$) liegt und die dazu ausgebildet ist, den fernzielreflektierten Lichtstrahl (5) in einem ersten Brennpunkt ($F_1$) zu fokussieren, und
   eine Detektoreinheit (6) zur Detektion von fokussiertem Licht, **dadurch gekennzeichnet, dass**
   die Detektoreinheit (6) derart angeordnet ist, dass der erste Brennpunkt ($F_1$) zwischen der Primärlinse (2) und der Detektoreinheit (6) liegt,
   wobei eine Blende (13, 15, 17, 19) innerhalb eines zur optischen Achse (A) normalen Querschnitts ($Q_1$, $Q_2$, $Q_i$) des fernzielreflektierten Lichtstrahls (5) zwischen dem ersten Brennpunkt ($F_1$) und der Detektoreinheit (6) angeordnet ist,
   wobei die Blende (13, 15, 17, 19) derart angeordnet und/oder ausgebildet ist, dass sie einen größeren Anteil von nahzielreflektierten Lichtstrahlen (7) als von fernzielreflektierten Lichtstrahlen (5) blockiert.

2. Optische Vorrichtung nach Anspruch 1, **dadurch gekennzeichnet, dass** die Lichtquelle (3) in Strahlrichtung ($R_2$) des fernzielreflektierten Lichtstrahls (5) gesehen in dessen Strahlengang vor der Primärlinse (2) angeordnet ist, wobei die Blende (13, 15, 17, 19) in jenem Schatten (S) der Lichtquelle (3) liegt, den die Lichtquelle (3) im fernzielreflektierten Lichtstrahl (5) wirft.

3. Optische Vorrichtung nach Anspruch 2, **dadurch gekennzeichnet, dass** die Blende (13, 15, 17, 19) den genannten Schatten (S) im genannten Querschnitt ($Q_1$, $Q_2$, $Q_i$) vollständig einnimmt.

4. Optische Vorrichtung nach einem der Ansprüche 1 bis 3, **dadurch gekennzeichnet, dass** zumindest eine weitere Blende (15) innerhalb eines weiteren zur genannten optischen Achse (A) normalen Querschnitts ($Q_2$) des fernzielreflektierten Lichtstrahls (5) zwischen dem ersten Brennpunkt ($F_1$) und der Detektoreinheit (6) angeordnet ist.

5. Optische Vorrichtung nach Anspruch 4, **dadurch gekennzeichnet, dass** die Blenden (13, 15) im Querschnitt ($Q_1$, $Q_2$) unterschiedliche Flächen ($x_1$, $x_2$) aufweisen und ihre Fläche ($x_1$, $x_2$) umso größer ist, je weiter die jeweilige Blende (13, 15) vom ersten Brennpunkt ($F_1$) beabstandet ist.

6. Optische Vorrichtung nach einem der Ansprüche 1 bis 5, **dadurch gekennzeichnet, dass** die Blende (13, 15, 17, 19) eine von einer Glasplatte getragene opake Struktur ist.

7. Optische Vorrichtung nach einem der Ansprüche 1 bis 6, **dadurch gekennzeichnet, dass** die Blende (13, 15) eine runde Scheibe ist.

8. Optische Vorrichtung nach einem der Ansprüche 1 bis 6, **dadurch gekennzeichnet, dass** die Blende (17, 19) ein Kegel oder ein Kegelstumpf ist, der sich in Strahlrichtung ($R_2$) des fernzielreflektierten Lichtstrahls (5) gesehen erweitert.

9. Optische Vorrichtung nach Anspruch 8, **dadurch gekennzeichnet, dass** der Öffnungswinkel des Kegels im Wesentlichen an den Strahlengang des fernzielreflektierten Lichtstrahls (5) angepasst ist.

10. Optische Vorrichtung nach einem der Ansprüche 1 bis 9, **dadurch gekennzeichnet, dass** die dem ersten Brennpunkt ($F_1$) nächstliegende Blende (13, 17, 19) in einem Abstand ($d_1$) von mindestens 100 $\mu$m von dem ersten Brennpunkt ($F_1$) angeordnet ist.

11. Optische Vorrichtung nach einem der Ansprüche 1 bis 10, **dadurch gekennzeichnet, dass** der Durchmesser der Blende (13, 15, 17, 19) 50 - 100 %, bevorzugt 80 - 100 %, besonders bevorzugt im Wesentlichen 100 %, einer Bildgröße B beträgt, die gleich $G_R * d_1 / f_1$ ist, wobei $G_R$ der Strahldurchmesser eines ausgesandten Lichtstrahls (4) ist, der sich auf einem in einer vorgegebenen Entfernung (R) von der Primärlinse (2) liegenden, ausgedehnten Nahziel ergibt, $d_1$ der Abstand der Blende (13, 15, 17, 19) zum ersten Brennpunkt ($F_1$) und $f_1$ der Abstand der Primärlinse (2) zum ersten Brennpunkt ($F_1$) ist.

12. Optische Vorrichtung nach einem der Ansprüche 1 bis 11, **gekennzeichnet durch** eine Relais-Optik (10), die zwischen dem ersten Brennpunkt ($F_1$) und der Detektoreinheit (6) angeordnet und dazu ausgebildet ist, den vom ersten Brennpunkt ($F_1$) aus divergierenden fernzielreflektierten Lichtstrahl (5) auf einen zweiten Brennpunkt ($F_2$) zu fokussieren, wobei die Detektoreinheit (6) im Wesentlichen im zweiten Brennpunkt ($F_2$) angeordnet ist.

13. Optische Vorrichtung nach Anspruch 12, **dadurch gekennzeichnet, dass** die Blende (13, 15, 17, 19) an der Relais-Optik (10) montiert ist.

14. Optische Vorrichtung nach einem der Ansprüche 1 bis 11 in Verbindung mit Anspruch 4, **gekennzeichnet durch** eine erste und eine zweite Relais-Optik (10), die zwischen dem ersten Brennpunkt ($F_1$) und der Detektoreinheit (6) angeordnet sind, wobei die erste Relais-Optik (10, 20) dazu ausgebildet ist, den vom ersten Brennpunkt ($F_1$) aus divergierenden fernzielreflektierten Lichtstrahl (5) auf einen zweiten Brennpunkt ($F_2$) zu fokussieren, und die zweite Relais-Optik (20) dazu ausgebildet ist, den vom zweiten Brennpunkt ($F_2$) aus divergierenden fernzielreflektierten Lichtstrahl (5) auf einen dritten Brennpunkt ($F_3$) zu fokussieren, wobei die genannte Blende (13) zwischen dem ersten Brennpunkt ($F_1$) und der ersten Relais-Optik (10) und die genannte weitere Blende (15) zwischen dem zweiten Brennpunkt ($F_2$) und der zweiten Relais-Optik (20) angeordnet ist, und wobei die Detektoreinheit (6) im Wesentlichen im dritten Brennpunkt ($F_3$) angeordnet ist.

15. Optische Vorrichtung nach einem der Ansprüche 1 bis 11, **dadurch gekennzeichnet, dass** die Detektoreinheit (6) in jenem Bereich angeordnet ist, in dem der fernzielreflektierte Lichtstrahl (5) vom ersten Brennpunkt ($F_1$) aus divergiert, wobei die Detektoreinheit (6) eine Detektionsfläche hat, die sich über den gesamten Querschnitt des fernzielreflektierten Lichtstrahls (5) erstreckt.

16. Optische Vorrichtung nach Anspruch 15, **dadurch gekennzeichnet, dass** die Blende (13, 15, 17, 19) an der Detektoreinheit (6) montiert ist.

17. Optische Vorrichtung nach einem der Ansprüche 1 bis 16, **dadurch gekennzeichnet, dass** der Abstand ($d_1$, $d_2$) der Blende (13, 15, 17, 19) vom ersten Brennpunkt ($F_1$) und/oder die Fläche ($x_1$, $x_2$) der Blende (13, 15, 17, 19) im genannten Querschnitt ($Q_1$, $Q_2$) und/oder die Position der Fläche ($x_1$, $x_2$) der Blende (13, 15, 17, 19) im genannten Querschnitt ($Q_1$, $Q_2$) veränderbar ist bzw. sind.

18. Optische Vorrichtung nach Anspruch 17, **gekennzeichnet durch** einen Motor, der dazu ausgebildet ist, den genannten Abstand ($d_1$, $d_2$), die genannte Fläche ($x_1$, $x_2$) bzw. die genannte Position zu verändern.

**Claims**

1. Optical apparatus (9) for detecting a light beam (5) reflected by a far-target under attenuation of the near-range sensitivity of the apparatus, comprising a light source (3) configured to emit the light beam (4) in a predetermined direction ($R_1$) towards the far-target, a primary lens (2) whose optical axis (A) lies substantially parallel to said predetermined direction ($R_1$) and which is configured to focus the far-target reflected light beam (5) in a first focus ($F_1$), and a detecting unit (6) for detecting focused light, **characterised in that** the detecting unit (6) is arranged in such a way that the first focus ($F_1$) lies between the primary lens (2) and the detecting unit (6), wherein a diaphragm (13, 15, 17, 19) is arranged between the first focus ($F_1$) and the detecting unit (6) within a cross section ($Q_1$, $Q_2$, $Q_i$) of the far-target reflected light beam (5), which cross section is normal to the optical axis (A), wherein the diaphragm (13, 15, 17, 19) is arranged and/or configured in such a way that it blocks a higher portion of light beams (7) reflected by a near-target than of light beams (5) reflected by a far-target.

2. Optical apparatus according to claim 1, **characterised in that** the light source (3) is arranged, when seen in beam direction ($R_2$) of the far-target reflected light beam (5), in said light beam's beam path in front of the primary lens (2), wherein the diaphragm (13, 15, 17, 19) lies **in that** shadow (S) of the light source (3) which the light source (3) casts in the far-target reflected light beam (5).

3. Optical apparatus according to claim 2, **characterised in that** the diaphragm (13, 15, 17, 19) fully covers said shadow (S) in said cross section ($Q_1$, $Q_2$, $Q_i$).

4. Optical apparatus according to any one of claims 1 to 3, **characterised in that** at least one further diaphragm (15) is arranged between the first focus ($F_1$) and the detecting unit (6) within a further cross section ($Q_2$) of the far-target reflected light beam (5), which further cross section is normal to said optical axis (A).

5. Optical apparatus according to claim 4, **characterised in that** the diaphragms (13, 15) have different surfaces ($x_1$, $x_2$) in said cross sections ($Q_1$, $Q_2$) and their surface ($x_1$, $x_2$) is the larger, the larger the distance of the respective diaphragm (13, 15) from the first focus ($F_1$) is.

**6.** Optical apparatus according to any one of claims 1 to 5, **characterised in that** the diaphragm (13, 15, 17, 19) is an opaque structure carried by a glass plate.

**7.** Optical apparatus according to any one of claims 1 to 6, **characterised in that** the diaphragm (13, 15) is a round disc.

**8.** Optical apparatus according to any one of claims 1 to 6, **characterised in that** the diaphragm (17, 19) is a cone or a truncated cone flaring when seen in beam direction ($R_2$) of the far-target reflected light beam (5).

**9.** Optical apparatus according to claim 8, **characterised in that** the flaring angle of the cone is substantially adapted to the beam path of the far-target reflected light beam (5).

**10.** Optical apparatus according to any one of claims 1 to 9, **characterised in that** the diaphragm (13, 17, 19) which is closest to the first focus ($F_1$) is arranged at a distance ($d_1$) of at least 100 $\mu$m from the first focus ($F_1$).

**11.** Optical apparatus according to any one of claims 1 to 10, **characterised in that** the diameter of the diaphragm (13, 15, 17, 19) is 50 - 100 %, preferably 80 - 100 %, particularly preferably substantially 100 %, of an image size B which equates to $G_R * d_1 / f_1$, wherein $G_R$ is the beam diameter of an emitted light beam (4), which beam diameter arises on an extended near-target lying at a predetermined distance (R) from the primary lens (2), $d_1$ is the distance of the diaphragm (13, 15, 17, 19) to the first focus ($F_1$), and $f_1$ is the distance of the primary lens (2) to the first focus ($F_1$).

**12.** Optical apparatus according to any one of claims 1 to 11, **characterised by** a relay optics (10) which is arranged between the first focus ($F_1$) and the detecting unit (6) and configured to focus the far-target reflected light beam (5) diverging from the first focus ($F_1$) onto a second focus ($F_2$), wherein the detecting unit (6) is substantially arranged in the second focus ($F_2$) .

**13.** Optical apparatus according to claim 12, **characterised in that** the diaphragm (13, 15, 17, 19) is mounted on the relay optics (10).

**14.** Optical apparatus according to any one of claims 1 to 11 in combination with claim 4, **characterised by** a first and a second relay optics (10), which are arranged between the first focus ($F_1$) and the detecting unit (6), wherein the first relay optics (10, 20) is configured to focus the far-target reflected light beam (5) diverging from the first focus ($F_1$) onto a second focus ($F_2$), and the second relay optics (20) is configured to focus the far-target reflected light beam (5) diverging from the second focus ($F_2$) onto a third focus ($F_3$), wherein said diaphragm (13) is arranged between the first focus ($F_1$) and the first relay optics (10) and said further diaphragm (15) is arranged between the second focus ($F_2$) and the second relay optics (20), and wherein the detecting unit (6) is substantially arranged in the third focus ($F_3$) .

**15.** Optical apparatus according to any one of claims 1 to 11, **characterised in that** the detecting unit (6) is arranged **in that** region in which the far-target reflected light beam (5) diverges from the first focus ($F_1$), wherein the detecting unit (6) has a detecting surface which extends over the whole cross section of the far-target reflected light beam (5).

**16.** Optical apparatus according to claim 15, **characterised in that** the diaphragm (13, 15, 17, 19) is mounted on the detecting unit (6).

**17.** Optical apparatus according to any one of claims 1 to 16, **characterised in that** the distance ($d_1$, $d_2$) of the diaphragm (13, 15, 17, 19) from the first focus ($F_1$) and/or the surface ($x_1$, $x_2$) of the diaphragm (13, 15, 17, 19) in said cross section ($Q_1$, $Q_2$) and/or the position of the surface ($x_1$, $x_2$) of the diaphragm (13, 15, 17, 19) in said cross section ($Q_1$, $Q_2$) is/are modifiable.

**18.** Optical apparatus according to claim 17, **characterised by** a motor which is configured to modify said distance ($d_1$, $d_2$), said surface ($x_1$, $x_2$) and/or said position.

**Revendications**

**1.** Dispositif optique (9) pour détecter un faisceau lumineux réfléchi (5) sur une cible lointaine, sous l'amortissement de la sensibilité à courte portée du dispositif, comprenant
une source de lumière (3) qui est conçue pour émettre le faisceau lumineux (4) dans une direction prédéfinie ($R_1$) sur la cible lointaine,
une lentille primaire (2) dont l'axe optique (A) se situe sensiblement parallèle par rapport à ladite direction prédéfinie ($R_1$) et qui est conçue pour focaliser le faisceau lumineux réfléchi (5) par la cible lointaine dans un premier foyer ($F_1$), et
une unité de détection (6) pour la détection de lumière focalisée, **caractérisé en ce que**
l'unité de détection (6) est disposée de telle manière que le premier foyer ($F_1$) se situe entre la lentille primaire (2) et l'unité de détection (6),
où un diaphragme (13, 15, 17, 19) est disposé entre le premier foyer ($F_1$) et l'unité de détection (6) à l'intérieur d'une section transversale ($Q_1$, $Q_2$, $Q_i$) du faisceau lumineux réfléchi (5) par la cible lointaine, quelle section est normale par rapport à l'axe optique (A),
où le diaphragme (13, 15, 17, 19) est disposé et/ou conçu de telle manière qu'il bloque une partie plus grande des faisceaux lumineux réfléchis par une cible proche (7) que des faisceaux lumineux réfléchis (5) par une cible lointaine.

2. Dispositif optique selon la revendication 1, **caractérisé en ce que** la source de lumière (3) est disposée, vu dans la direction de rayonnement ($R_2$) du faisceau lumineux réfléchi (5) par la cible lointaine, dans son trajet de rayonnement avant la lentille primaire (2), où le diaphragme (13, 15, 17, 19) se situe dans l'ombre (S) en question de la source de lumière (3) que projette la source de lumière (3) dans le faisceau lumineux réfléchi (5) par la cible lointaine.

3. Dispositif optique selon la revendication 2, **caractérisé en ce que** le diaphragme (13, 15, 17, 19) couvre totalement ladite ombre (S) dans ladite section transversale ($Q_1$, $Q_2$, $Q_i$).

4. Dispositif optique selon l'une des revendications 1 à 3, **caractérisé en ce qu'**au moins un autre diaphragme (15) est disposé entre le premier foyer ($F_1$) et l'unité de détection (6) à l'intérieur d'une autre section transversale ($Q_2$) du faisceau lumineux réfléchi (5) par la cible lointaine, quelle autre section est normale par rapport audit axe optique (A).

5. Dispositif optique selon la revendication 4, **caractérisé en ce que** les diaphragmes (13, 15) dans les sections transversales ($Q_1$, $Q_2$) présentent des surfaces ($x_1$, $x_2$) différentes et leur surface ($x_1$, $x_2$) est d'autant plus grande que le diaphragme (13, 15) en question est éloigné du premier foyer ($F_1$).

6. Dispositif optique selon l'une des revendications 1 à 5, **caractérisé en ce que** le diaphragme (13, 15, 17, 19) est une structure opaque portée par une plaque de verre.

7. Dispositif optique selon l'une des revendications 1 à 6, **caractérisé en ce que** le diaphragme (13, 15) est un disque circulaire.

8. Dispositif optique selon l'une des revendications 1 à 6, caractérisé en ce le diaphragme (17, 19) est un cône ou un tronc conique qui s'élargit vu dans la direction de rayonnement ($R_2$) du faisceau lumineux réfléchi (5) par la cible lointaine.

9. Dispositif optique selon la revendication 8, **caractérisé en ce que** l'angle d'ouverture du cône est sensiblement adapté au trajet du rayonnement du faisceau lumineux réfléchi (5) par la cible lointaine.

10. Dispositif optique selon l'une des revendications 1 à 9, **caractérisé en ce que** le diaphragme (13, 17, 19) se situant le plus près du premier foyer ($F_1$) est disposé à une distance ($d_1$) d'au moins 100 µm par rapport au premier foyer ($F_1$).

11. Dispositif optique selon l'une des revendications 1 à 10, **caractérisé en ce que** le diamètre du diaphragme (13, 15, 17, 19) est de 50 à 100 %, de préférence, de 80 à 100 %, de manière particulièrement préférée environ 100 %, d'une taille d'image B qui est égale à $G_R * d_1 / f_1$, où $G_R$ est le diamètre de faisceau d'un faisceau lumineux émis (4) qui se produit sur une cible proche s'étendant et se situant à une distance (R) prédéfinie de la lentille primaire (2), $d_1$ est la distance du diaphragme (13, 15, 17, 19) jusqu'au premier foyer ($F_1$), et $f_1$ est la distance de la lentille primaire (2) jusqu'au premier foyer ($F_1$).

12. Dispositif optique selon l'une des revendications 1 à 11, **caractérisé par** un relais optique (10) qui est disposé entre le premier foyer ($F_1$) et l'unité de détection (6) et conçu pour focaliser le faisceau lumineux réfléchi (5) par la cible lointaine et divergent à partir du premier foyer ($F_1$) sur un deuxième foyer ($F_2$),
où l'unité de détection (6) est disposée sensiblement dans le deuxième foyer ($F_2$).

13. Dispositif optique selon la revendication 12, **caractérisé en ce que** le diaphragme (13, 15, 17, 19) est monté sur le relais optique (10).

14. Dispositif optique selon l'une des revendications 1 à 11 en combinaison avec la revendication 4, **caractérisé par** un premier et un deuxième relais optique (10) qui sont disposés entre le premier foyer ($F_1$) et l'unité de détection (6),
où le premier relais optique (10, 20) est conçu pour focaliser le faisceau lumineux réfléchi (5) par la cible lointaine et divergent à partir du premier foyer ($F_1$) sur un deuxième foyer ($F_2$) et le deuxième relais optique (20) est conçu pour focaliser le faisceau lumineux réfléchi (5) par la cible lointaine et divergent à partir du deuxième foyer ($F_2$) sur un troisième foyer ($F_3$),
où ledit diaphragme (13) est disposé entre le premier foyer ($F_1$) et le premier relais optique (10) et ledit autre diaphragme (15) est disposé entre le deuxième foyer ($F_2$) et le deuxième relais optique (20), et
où l'unité de détection (6) est disposée sensiblement dans le troisième foyer ($F_3$).

**15.** Dispositif optique selon l'une des revendications 1 à 11, **caractérisé en ce que** l'unité de détection (6) est disposée dans une région dans laquelle le faisceau lumineux réfléchi (5) par la cible lointaine diverge à partir du premier foyer ($F_1$), où l'unité de détection (6) a une surface de détection qui s'étend sur toute la section transversale du faisceau lumineux réfléchi (5) par la cible lointaine.

**16.** Dispositif optique selon la revendication 15, **caractérisé en ce que** le diaphragme (13, 15, 17, 19) est monté sur l'unité de détection (6).

**17.** Dispositif optique selon l'une des revendications 1 à 16, **caractérisé en ce que** la distance ($d_1$, $d_2$) du diaphragme (13, 15, 17, 19) à partir du premier foyer ($F_1$) et/ou la surface ($x_1$, $x_2$) du diaphragme (13, 15, 17, 19) dans ladite section transversale ($Q_1$, $Q_2$) et/ou la position de la surface ($x_1$, $x_2$) du diaphragme (13, 15, 17, 19) dans ladite section transversale ($Q_1$, $Q_2$) est/sont modifiable/s.

**18.** Dispositif optique selon la revendication 17, **caractérisé par** un moteur qui est conçu pour modifier ladite distance ($d_1$, $d_2$), ladite surface ($x_1$, $x_2$) et/ou ladite position.

## *Fig. 1*
### *(Stand der Technik)*

## *Fig. 2*

**Fig. 3**

**Fig. 4**

**Fig. 5**

**Fig. 6**

**Fig. 7**

**Fig. 8**

*Fig. 9*

*Fig. 10*

*Fig. 12*

*Fig. 11*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2016173711 A1